Europäisches Patentamt

European Patent Office

Office européen des brevets

(19)

(11) Veröffentlichungsnummer : **0 082 472**
**B1**

(12) **EUROPÄISCHE PATENTSCHRIFT**

(45) Veröffentlichungstag der Patentschrift :
30.07.86

(21) Anmeldenummer : 82111630.8

(22) Anmeldetag : 15.12.82

(51) Int. Cl.$^4$ : **C 07 F   9/38**

---

(54) Verfahren zur Herstellung von 3-Amino-1-hydroxypropan-1,1-diphosphonsäure.

---

(30) Priorität : 23.12.81 DE 3151038

(43) Veröffentlichungstag der Anmeldung :
29.06.83 Patentblatt 83/26

(45) Bekanntmachung des Hinweises auf die Patenterteilung : 30.07.86 Patentblatt 86/31

(84) Benannte Vertragsstaaten :
AT BE CH DE FR GB IT LI LU NL SE

(56) Entgegenhaltungen :
EP-A- 0 027 982
DE-A- 2 702 631
FR-A- 2 489 334

(73) Patentinhaber : Henkel Kommanditgesellschaft auf Aktien
Postfach 1100 Henkelstrasse 67
D-4000 Düsseldorf-Holthausen (DE)

(72) Erfinder : Blum, Helmut
Bertha-von-Suttner-Strasse 30
D-4000 Düsseldorf 13 (DE)
Erfinder : Worms, Karl-Heinz, Dr.
An d. Jagengrenze 5
D-4000 Düsseldorf 13 (DE)

**Beschreibung**

Die Erfindung betrifft ein verbessertes Verfahren zur Herstellung von 3-Amino-1-hydroxypropan-1,1-diphosphonsäure aus β-Alanin.

Aus der DE-A-2 130 794 ist es bekannt, 3-Amino-1-hydroxypropan-1,1-diphosphonsäure durch Umsetzung von β-Alanin oder Poly-β-Alanin mit einem Gemisch aus Phosphortrichlorid und phosphoriger Säure in Gegenwart oder in Abwesenheit eines organischen Verdünnungsmittels herzustellen. Bei dieser Umsetzung entstehen jedoch gelb-rote Nebenprodukte in Form von amorphen Phosphorsauerstoffverbindungen unbekannter Struktur, deren Abtrennung vor allem in Gegenwart von Chlorbenzol sehr aufwendig ist. Bei der Herstellung von größeren Mengen ist weiterhin zu berücksichtigen, daß diese Phosphorverbindungen gefährliche, leicht entzündliche Nebenprodukte darstellen.

Aus der DE-A-27 02 631 ist es weiterhin bekannt, zur Vermeidung dieser Nachteile 3-Amino-1-hydroxypropan-1, 1-diphosphonsäure herzustellen, indem man β-Alanin mit einem Gemisch aus phosphoriger Säure und $POCl_3$ umsetzt und das Reaktionsgemisch anschließend hydrolysiert. Dieses Verfahren ist unter anderem in Hinblick auf die Ausbeuten nicht befriedigend.

Schließlich ist es aus der EP-A-0 027 982 auch bekannt, zur Herstellung der oben genannten Verbindung β-Alanin mit einem Gemisch aus phosphoriger Säure und $PCl_5$ oder phosphoriger Säure, $PCl_3$ und Chlor umzusetzen und das Reaktionsgemisch anschließend zu hydrolysieren. Bei diesem Verfahren ist es jedoch erforderlich, mit einem Verdünnungsmittel — wie beispielsweise Chlorbenzol — zu arbeiten um eine hinreichende Ausbeute zu erhalten. Auch läßt sich eine starke Chlorwasserstoffentwicklung nicht vermeiden.

Es wurde nun gefunden, daß man die bisherige Arbeitsweise dadurch verbessern kann, indem man sich des nachstehend beschriebenen Verfahrens bedient.

Gegenstand der vorliegenden Erfindung ist ein Verfahren zur Herstellung von 3-Amino-1-hydroxypropan-1,1-diphosphonsäure durch Umsetzung von β-Alanin mit einer Sauerstoffsäure des Phosphors und einem Phosphorhalogenid, dadurch gekennzeichnet, daß man β-Alanin mit einem Gemisch aus Phosphortrichlorid und wasserfreier Phosphorsäure bei Temperaturen im Bereich von 80 bis 130 °C umsetzt und das Reaktionsprodukt anschließend hydrolysiert.

Zweckmäßigerweise werden pro Mol β-Alanin 1 bis 2 Mol $PCl_3$ sowie 1 bis 2 Mol $H_3PO_4$ eingesetzt. Bei der zur Verwendung gelangenden Phosphorsäure handelt es sich um praktisch wasserfreie Produkte, die im Handel auch unter der Bezeichnung « kristallisierte Phosphorsäure » erhältlich sind und mindestens 98 % $H_3PO_4$ enthalten. Das Verfahren kann auch gewünschtenfalls in Gegenwart von Verdünnungsmitteln, wie Chlorbenzol, Tetrachlorethan, Tetrachlorethylen, Trichlorethylen und Tetrachlorkohlenstoff Anwendung finden. Jedoch ist im allgemeinen die Verwendung derartiger Verdünnungsmittel nicht erforderlich. Die Umsetzung erfolgt bei Temperaturen zwischen 80 bis 130 °C, vorzugsweise bei etwa 100 °C. Die Reaktionsdauer vom Zeitpunkt des Aufheizens bis zur Hydrolyse beträgt etwa 1,5 bis 2,5 Stunden.

Das anfallende Reaktionsgemisch wird durch Zugabe von Wasser hydrolysiert. Dabei ist es zweckmäßig, so viel Wasser zuzusetzen bis das Reaktionsprodukt gerade gelöst ist. Die 3-Amino-1-hydroxypropan-1,1-diphosphonsäure kristallisiert dann — gegebenenfalls nach Abtrennung des Lösungsmittels — aus der erkalteten wäßrigen Lösung aus. Die Ausbeute läßt sich noch durch Abtrennen der Mutterlauge und durch Zusatz von Alkohol und/oder Aceton steigern.

Das neue Verfahren besitzt eine Reihe von Vorteilen : Es treten keine phosphorpolymerartigen Zersetzungsprodukte auf ; es erfolgt keine stärkere Umweltbelastung durch starke HCl-Entwicklung ; ein Verdünnungsmittel ist nicht notwendig ; die Reaktionszeiten sind merklich kürzer.

Beispiel 1

Zu 1 Mol 98 %ige Phosphorsäure wurden 1 Mol Phosphortrichlorid rasch zugetropft und dann danach mit 0,5 Mol β-Alanin durch einmalige Zugabe vermischt. Das Reaktionsgemische wird innerhalb einer Stunde auf etwa 100 °C erhitzt und noch 60 Minuten bei dieser Temperatur belassen. Danach erfolgt die Hydrolyse durch Zusatz einer entsprechenden Menge Wasser, wobei nur ein geringer Überschuß verwendet wurde. Beim Abkühlen scheidet sich die 3-Amino-1-hydroxypropan-1,1-diphosphonsäure in kristalliner Form ab. Die Ausbeute beträgt 58 %. Sie läßt sich noch dadurch verbessern, daß nach der Hydrolyse ein Teil des Wassers eingedampft und/oder Alkohol beziehungsweise Aceton zugesetzt wird.

Beispiel 2

Zu 2 Mol 98 %ige $H_3PO_4$ wurden 2 Mol $PCl_3$ zugegeben und weiterhin 2 Mol β-Alanin auf einmal zugesetzt. Das Reaktionsgemisch wurde auf 95 °C erhitzt und anschließend durch Hinzufügung von Wasser hydrolysiert. Die Reaktionsdauer vom Zeitpunkt des Aufheizens bis zur Hydrolyse betrug 2,5 Stunden. Es wurde eine Gesamtausbeute von 60 % erhalten.

Beispiel 3

1 Mol 100 %ige $H_3PO_4$ wurden mit 1 Mol $PCl_3$ sowie 0,5 Mol β-Alanin vermischt und das Reaktionsgemisch auf 100 °C erhitzt. Anschließend wurde das Reaktionsprodukt mit der zur Hydrolyse notwendigen Wassermenge mit einem Überschuß von 10 % versetzt und aufgekocht. Die Reaktionsdauer vom Zeitpunkt des Aufheizens bis zur Hydrolyse betrug 2 1/4 Stunden. Beim Abkühlen scheidet 3-Amino-1-hydroxypropan-1,1-diphosphonsäure in kristalliner Form ab. Die Ausbeute betrug 55 %, die sich noch dadurch verbessern läßt, daß dem Filtrat Ethylalkohol zugesetzt wird.

## Patentansprüche

1. Verfahren zur Herstellung von 3-Amino-1-hydroxypropan-1,1-diphosphonsäure durch Umsetzung von β-Alanin mit einer Sauerstoffsäure des Phosphors und einem Phosphorhalogenid, dadurch gekennzeichnet, daß man β-Alanin mit einem Gemisch aus Phosphortrichlorid und wasserfreier Phosphorsäure bei Temperaturen im Bereich von 80 bis 130 °C umsetzt und das Reaktionsprodukt anschließend hydrolysiert.

2. Verfahren nach Anspruch 1, dadurch gekennzeichet, daß das Molverhältnis β-Alanin : $PCl_3$ : $H_3PO_4$ 1 : 1 : 1 bis 1 : 2 : 2 beträgt.

## Claims

1. A process for the production of 3-amino-1-hydroxypropane-1,1-diphosphonic acid by reaction of β-alanine with an oxyacid of phosphorus and a phosphorus halide, characterized in that β-alanine is reacted with a mixture of phosphorus trichloride and anhydrous phosphoric acid at temperatures of from 80 to 130 °C and the reaction product is subsequently hydrolyzed.

2. A process as claimed in Claim 1, characterized in that the molar ratio of β-alanine to $PCl_3$ to $H_3PO_4$ is from 1 : 1 : 1 to 1 : 2 : 2.

## Revendications

1. Procédé de fabrication d'acide 3-amino-1-hydroxypropane-1,1-diphosphonique par réaction de la β-alanine avec un oxyacide du phosphore et un halogénure de phosphore, caractérisé en ce qu'on fait réagir la β-alanine avec un mélange de trichlorure de phosphore et d'acide phosphorique anhydre à des températures dans l'intervalle de 80 à 130 °C et en ce qu'on hydrolyse ensuite le produit de la réaction.

2. Procédé selon la revendication 1, caractérisé en ce que le rapport molaire β-alanine : $PCl_3$ : $H_3PO_4$ est de 1 : 1 : 1 à 1 : 2 : 2.